# EUROPÄISCHE PATENTSCHRIFT

(11) **EP 1 306 398 B1**
(45) Veröffentlichungstag und Bekanntmachung des Hinweises auf die Patenterteilung: **26.10.2005**
(21) Anmeldenummer: 02023080.1
(22) Anmeldetag: 17.10.2002
(51) Int. Cl.: C08G 18/08, C08G 18/12, C08G 18/66, C09D 175/04

(54) **Hochmolekulare Polyurethan-Dispersionen**
High molecular weight polyurethane dispersions
Dispersions de polyuréthane ayant un poids moléculaire élevé

(30) Priorität: 26.10.2001 DE 10152294
(43) Veröffentlichungstag der Anmeldung: 02.05.2003
(73) Patentinhaber: Cytec Surface Specialties Austria GmbH, 8402 Werndorf (AT)
(72) Erfinder: Schafheutle, Markus, Dr., 8044 Graz (AT); Arzt, Anton, 8430 Tillmitsch (AT); Burkl, Julius, 8053 Graz (AT); Glettler, Martina, 8041 Graz (AT); Petritsch, Gerlinde, 8054 Graz (AT); Wango, Jörg, 8142 Wundschuh (AT)
(74) Vertreter: Deckers, Hellmuth Alexander

(56) Entgegenhaltungen:
- EP-A- 0 590 484
- EP-A- 0 669 352
- DE-A- 19 630 905
- DE-A- 19 907 988

## Beschreibung

Wäßrige Polyurethan-Dispersionen werden vielfach als Bindemittel für wäßrige Lacke eingesetzt. Unter diesen kennt man Ein-Komponenten-Systeme, die physikalisch (durch Abdunsten des Wassers) trocknen, wobei die Filmbildung gegebenenfalls durch Zusatz von in der Wärme wirksamen Vernetzungsmitteln unterstützt wird (Einbrennlacke, Härtung mit Melaminharzen oder blockierten Isocyanaten bei Temperaturen über 120 bis 140 °C); sowie Zwei-Komponenten-Systeme, wobei hydroxyfunktionelle Bindemittel-Bestandteile unmittelbar vor der Applikation mit unblockierten Isocyanaten gemischt werden und die Vernetzungsreaktion bei Raumtemperatur (oder zur Beschleunigung der Härtung bei erhöhter Temperatur) abläuft. Im letzteren Fall ist es auch möglich, das unblockierte Isocyanat in der wäßrigen Dispersion der hydroxyfunktionellen Bindemittelkomponente zu emulgieren, ohne daß es zu einer vorzeitigen Reaktion der beiden Komponenten kommt.

Durch Melaminharze oder blockierte Isocyanate gehärtete wäßrige Polyester-Polyurethan-Dispersionen werden in den Patentanmeldungen EP 0 669 352 A1 und EP 0 590 484 beschrieben. Sperrschichten auf Basis von Polyurethan-Harnstoffen sind in der DE 199 07 988 beschrieben. Auch diese werden mit Aminoplastharzen vernetzt. Polyurethanharnstoff-Dispersionen ohne Angabe ihrer molaren Masse und ihrer Säurezahl sind weiter aus der DE 196 30 905 bekannt.

Physikalisch trocknende Polyurethandispersionen erhält man in bekannter Weise durch Kettenverlängerung eines Isocyanat-funktionellen Präpolymeren in wäßriger Phase durch im Wasser gelöste mehrfunktionelle niedermolekulare Verbindungen, sogenannte Kettenverlängerer, wie Diamine oder Dihydrazide.

Bei lösungsmittelhaltigen derartigen physikalisch trocknenden Systemen werden hochviskose Lösungen mit relativ niedrigem Festkörpergehalt appliziert. Die darauf basierenden Lacke sind schnelltrocknend und ergeben zähe und elastische Filme mit guter Beständigkeit gegenüber Lösungsmitteln. Diese Lacke werden zur Beschichtung von flexiblen Substraten wie Lederimitaten und beispielsweise Magnetbändern und -folien eingesetzt.

Beschichtungen aus den bisher zugänglichen wäßrigen Systemen sind den aus lösungsmittelhaltigen Systemen noch unterlegen.

Es besteht daher die Aufgabe, wäßrige Polyurethandispersionen bereitzustellen, die physikalisch trocknen und zähelastische Filme mit guter Lösungsmittelbeständigkeit ergeben.

Die Aufgabe wird gelöst durch ein besonders hochmolekulares in Wasser dispergierbares Polyurethanharz.

Gegenstand der Erfindung ist daher ein in Wasser dispergierbares Polyurethanharz, das eine zahlenmittlere molare Masse Mₙ (gemessen durch Gelpermeationschromatographie, Eichung mit Polystyrol-Standards) von mindestens 10 kg/mol, bevorzugt mindestens 15, und besonders bevorzugt mindestens 20 kg/mol aufweist, und eine gewichtsmittlere molare Masse M_{w} von mindestens 20 kg/mol, bevorzugt mindestens 30, und besonders bevorzugt mindestens 40 kg/mol besitzt. Die Säurezahl der erfindungsgemäßen Harze, gemäß DIN 53 402 definiert als der Quotient derjenigen Masse *m*_{KOH} an Kaliumhydroxid, die erforderlich ist, um eine zu untersuchende Probe zu neutralisieren, und der Masse *m*_{B} dieser Probe (Masse des Feststoffes in der Probe bei Lösungen oder Dispersionen), beträgt bevorzugt 20 bis 50 mg/g, insbesondere 25 bis 45 mg/g.

Das Polyurethanharz enthält Bausteine abgeleitet von Polyisocyanaten A, Polyolen B mit einer zahlenmittleren molaren Masse Mₙ von mindestens 400 g/mol, gegebenenfalls niedermolekularen Polyolen C mit Mₙ unter 400 g/mol, Verbindungen D, die mindestens zwei gegenüber Isocyanatgruppen reaktive Gruppen und mindestens eine zur Anionenbildung befähigte Gruppe aufweisen, niedermolekularen Polyolen **E,** die gegenüber Isocyanatgruppen keine weiteren reaktiven Gruppen tragen, Verbindungen **F,** die gegenüber Isocyanaten monofunktionell sind oder aktiven Wasserstoff unterschiedlicher Reaktivität enthalten und von den Verbindungen **E** verschieden sind, sowie gegebenenfalls Verbindungen **G,** die von **B, C, D, E** und **F** verschieden sind und mindestens zwei mit NCO-Gruppen reaktive Gruppen enthalten.

Besonders gute Resultate werden erhalten, wenn die zahlenmittlere molare Masse des Polyurethanharzes mindestens 25 kg/mol beträgt.

Dabei beträgt die gewichtsmittlere molare Masse M_{w} über 50 kg/mol, bevorzugt mindestens 51, und insbesondere mindestens 55 kg/mol.

Die Erfindung betrifft weiter ein Verfahren zur Herstellung hochmolekularer, in Wasser dispergierbarer Polyurethanharze, umfassend die Schritte
- Synthese eines Isocyanat-funktionellen Präpolymeren durch Umsetzung von Polyisocyanaten **A** mit Polyolen **B** mit einer zahlenmittleren molaren Masse Mₙ von mindestens 400 g/mol, gegebenenfalls niedermolekularen Polyolen **C** und Verbindungen **D**, die mindestens zwei gegenüber Isocyanatgruppen reaktive Gruppen und mindestens eine zur Anionenbildung befähigte Gruppe aufweisen, zu einem freie NCO-Gruppen enthaltenden Präpolymeren, das einen Staudinger-Index *J*₀ von mindestens 20 cm³/g, bevorzugt mindestens 23 cm³/g, und besonders bevorzugt mindestens 26 cm³/g aufweist,
- zumindest teilweise Neutralisation der zur Anionenbildung befähigten Gruppe der Verbindung **D** unter Bildung von anionischen Gruppen, Dispergierung dieses Präpolymeren in Wasser und
- Umsetzung des neutralisierten Präpolymeren mit mindestens einer der Komponenten ausgewählt aus niedermolekularen Polyolen **E,** die gegenüber Isocyanatgruppen keine weiteren reaktiven Gruppen tragen, wobei diese Verbindungen im Überschuß eingesetzt werden, Verbindungen **F,** die gegenüber Isocyanaten monofunktionell sind oder aktiven Wasserstoff unterschiedlicher Reaktivität enthalten und von den Verbindungen **E** verschieden sind, sowie gegebenenfalls Verbindungen **G,** die von **B, C, D, E** und **F** verschieden sind und mindestens zwei mit NCO-Gruppen reaktive Gruppen enthalten.

Der Staudinger-Index des im Schritt 1 gebildeten Präpolymeren, gemessen in N-Methylpyrrolidon/Chloroform als Lösungsmittel kann insbesondere noch höhere Werte als die oben genannten aufweisen, besonders gute Eigenschaften insbesondere bezüglich der Antrocknungsgeschwindigkeit werden nämlich erhalten, wenn *J*₀ mindestens 30 cm³/g, bevorzugt mindestens 33 cm³/g und insbesondere mindestens 35 cm³/g beträgt. Die früher so bezeichnete "Grenzviskositätszahl", nach DIN 1342, Teil 2.4, "Staudinger-Index" *J*₀ genannt, ist der Grenzwert der Staudinger-Funktion *J*ᵥ bei abnehmender Konzentration und Schubspannung, wobei *J*ᵥ die auf die Massenkonzentration β_{B} = *m*_{B} / *V* des gelösten Stoffes B (mit der Masse *m*_{B} des Stoffes im Volumen *V* der Lösung) bezogene relative Viskositätsänderung ist, also *J*ᵥ = (ηᵣ - 1) / β_{B}. Dabei bedeutet ηᵣ - 1 die relative Viskositätsänderung, gemäß ηᵣ - 1 = (η - ηₛ) / ηₛ. Die relative Viskosität ηᵣ ist der Quotient aus der Viskosität η der untersuchten Lösung und der Viskosität ηₛ des reinen Lösungsmittels. (Die physikalische Bedeutung des Staudinger-Index ist die eines spezifischen hydrodynamischen Volumens des solvatisierten Polymerknäuels bei unendlicher Verdünnung und im Ruhezustand.) Die üblicherweise für *J* verwendete Einheit ist "cm³/g"; häufig auch "ml/g" oder "dl/g".

Die Erfindung betrifft weiter Lacke, die diese Polyurethanharze als Bindemittel enthalten, wobei gegebenenfalls auch zusätzlich andere Bindemittel in Mischung mit diesen Polyurethanharzen eingesetzt werden können, Beschichtungen, die mit diesen Lacken hergestellt werden, sowie Filme, die zugänglich sind, indem Lacke, die die erfindungsgemäßen Polyurethanharze enthalten, auf nicht adhäsive Oberflächen aufgetragen werden, und die Lackfilme nach dem Trocknen bzw. nach der Härtung von diesen Oberflächen abgezogen werden.

Die Isocyanate A sind mindestens difunktionell und können ausgewählt werden aus aromatischen und aliphatischen linearen, cyclischen oder verzweigten Isocyanaten, insbesondere Diisocyanaten. Werden aromatische Isocyanate eingesetzt, so müssen diese in Mischung mit den genannten aliphatischen Isocyanaten verwendet werden. Dabei ist der Anteil der aromatischen Isocyanate so zu wählen, daß die Anzahl der durch diese in die Mischung eingeführten Isocyanatgruppen zumindest 5 % geringer ist als die Anzahl der nach der ersten Stufe verbleibenden Isocyanatgruppen in dem erzeugten Präpolymer. Bevorzugt werden Diisocyanate, wobei bis zu 5 % von deren Masse durch trifunktionelle oder höherfunktionelle Isocyanate ersetzt werden kann.

Die Diisocyanate besitzen vorzugsweise die Formel Q(NCO)₂, wobei Q für einen Kohlenwasserstoffrest mit 4 bis 40 C-Atomen, insbesondere 4 bis 20 C-Atomen steht und vorzugsweise einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 3-Isocyanatomethyl-3,5,5-trimethylcyclohexylisocyanat (Isophorondiisocyanat, IPDI), 4,4'-Diisocyanatodicyclohexylmethan, 4,4'-Diisocyanatodicyclohexylpropan-(2,2), 1,4-Diisocyanatobenzol, 2,4- oder 2,6-Diisocyanatotoluol bzw. Gemische dieser Isomeren, 4,4'- oder 2,4'-Diisocyanatodiphenylmethan, 4,4'-Diisocyanatodiphenylpropan-(2,2), p-Xylylendiisocyanat und α, α, α',α'-Tetramethyl-m- oder p-Xylylendiisocyanat sowie aus diesen Verbindungen bestehende Gemische.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodiimidgruppen, Allophanatgruppen, Isocyanuratgruppen, Urethangruppen, acylierte Harnstoffgruppen oder Biuretgruppen aufweisen. Bezüglich weiterer geeigneter Polyisocyanate sei beispielsweise auf die DE-A 29 28 552 verwiesen.

Geeignet sind auch "Lackpolyisocyanate" auf Basis von Hexamethylendiisocyanat oder von 1-Isocyanato-3,3,5-trimethyl-4-isocyanatomethyl-cyclohexan (IPDI) und/oder Bis(isocyanatocyclohexyl)-methan, insbesondere solche, welche ausschließlich auf Hexamethylendiisocyanat basieren. Unter "Lackpolyisocyanaten" auf Basis dieser Diisocyanate sind die an sich bekannten Biuret-, Urethan-, Uretdion- und/oder Isocyanuratgruppen aufweisenden Derivate dieser Diisocyanate zu verstehen, die im Anschluß an ihre Herstellung bei Bedarf in bekannter Weise, vorzugsweise durch Destillation von überschüssigem Ausgangsdiisocyanat bis auf einen restlichen Massenanteil von weniger als 0,5 % befreit worden sind. Zu den bevorzugten, erfindungsgemäß zu verwendenden aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschriften 3 124 605, 3 358 010, 3 903 126, 3 903 127 oder 3 976 622 erhalten werden können, und die aus Gemischen von N,N,N-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-A 4 324 879 erhalten werden können, und die im wesentlichen auf N,N,N-Tris-(6-isocyanatohexyl)-isocyanurat im Gemisch mit untergeordneten Mengen an seinen höheren Homologen bestehen. Insbesondere bevorzugt werden den genannten Kriterien entsprechende Gemische aus Uretdion- und/oder Isocyanuratgruppen aufweisenden Polyisocyanaten auf Basis von Hexamethylendiisocyanat, wie sie durch katalytische Oligomerisierung von Hexamethylendiisocyanat unter Verwendung von Trialkylphosphanen entstehen. Besonders bevorzugt sind die zuletzt genannten Gemische einer Viskosität bei 23 °C von 50 bis 20 000 mPa·s und einer zwischen 2,0 und 5,0 liegenden NCO-Funktionalität.

Bei den erfindungsgemäß ebenfalls geeigneten, jedoch bevorzugt in Mischung mit den vorgenannten aliphatischen Polyisocyanaten einzusetzenden aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan und eventuell anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanato-isocyanurate, die eventuell im Anschluß an ihre Herstellung vorzugsweise destillativ von überschüssigen monomeren Diisocyanaten befreit worden sind. In den Mischungen von aromatischen und (cyclo-)aliphatischen Isocyanaten werden die Mengen dieser beiden Komponenten so gewählt, daß sichergestellt ist, daß die Isocyanatgruppen des Präpolymeren ausschließlich oder mindestens zu 90 % (cyclo-) aliphatisch gebunden sind.

Die Polyisocyanatkomponente **A** kann im übrigen aus beliebigen Gemischen der beispielhaft genannten Polyisocyanate bestehen.

Der Massenanteil an von den Polyisocyanaten **A** abgeleiteten Bausteinen in dem Polyurethanharz liegt in der Regel bei ca. 10 bis 50 %, vorzugsweise 20 bis 35 %, bezogen auf die Masse des Polyurethanharzes.

Die Polyole **B** besitzen vorzugsweise eine zahlenmittlere molare Masse Mₙ von 400 bis 5000 g/mol, insbesondere 800 bis 2000 g/mol. Ihre Hydroxylzahl beträgt im allgemeinen 30 bis 280, vorzugsweise 40 bis 200 und insbesondere 50 bis 160 mg/g. Bevorzugt werden ausschließlich difunktionelle Polyole B eingesetzt; bis zu 5 % der Masse der Polyole B kann jedoch auch durch drei- oder höherwertige Polyole ersetzt werden.

Die Hydroxylzahl ist gemäß DIN 53 240 definiert als der Quotient derjenigen Masse *m*_{KOH} an Kaliumhydroxid, die genausoviel Hydroxylgruppen aufweist wie eine zu untersuchende Probe, und der Masse *m*_{B} dieser Probe (Masse des Feststoffes in der Probe bei Lösungen oder Dispersionen); ihre übliche Einheit ist "mg/g".

Beispiele für derartige Polyole, bei denen es sich um die aus der Polyurethanchemie bekannten Verbindungen handelt, sind Polyätherpolyole, Polyesterpolyole, Polycarbonatpolyole, Polyesteramidpolyole, Polyamidoamidpolyole, Epoxidharzpolyole und deren Umsetzungsprodukte mit CO₂, Polyacrylatpolyole und dergleichen. Derartige Polyole, die auch in Mischung eingesetzt werden können, sind beispielsweise in den DE-Offenlegungsschriften 20 20 905, 23 14 513 und 31 24 784 sowie in der EP-A 0 120 466 beschrieben. Es ist gleichfalls möglich, Ricinusöl als Polyolkomponente einzusetzen.

Von diesen Polyolen sind die Polyäther- und Polyesterpolyole bevorzugt, insbesondere solche, die nur endständige OH-Gruppen aufweisen und eine Funktionalität von kleiner als 3, vorzugsweise von 2,8 bis 2 und insbesondere von 2 besitzen.

Als Polyätherpolyole sind hier beispielsweise Polyoxyäthylenpolyole, Polyoxypropylenpolyole, Polyoxybutylenpolyole zu nennen und vorzugsweise Polytetrahydrofurane mit endständigen OH-Gruppen.

Die erfindungsgemäß besonders bevorzugten Polyesterpolyole sind die bekannten Polykondensate aus organischen Di- sowie gegebenenfalls Poly- (Tri-, Tetra-) Hydroxyverbindungen und Di- sowie gegebenenfalls Poly- (Tri-, Tetra-) Carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Äthylenglykol, 1,2-Butandiol, Diäthylenglykol, Triäthylenglykol, Polyalkylenglykole, wie Polyäthylenglykol, weiterhin 1,2- und 1,3-Propandiol, 1,4-Butandiol, 1,6-Hexandiol, Neopentylglykol oder Hydroxypivalinsäureneopentylglykolester. Als gegebenenfalls mit einzusetzende Polyole mit drei oder mehr Hydroxylgruppen im Molekül sind hier beispielsweise Trimethylolpropan, Trimethyloläthan, Glycerin, Erythrit, Pentaerythrit, Ditrimethylolpropan, Dipentaerythrit, Trimethylolbenzol oder Trishydroxyäthylisocyanurat zu nennen.

Als Dicarbonsäuren geeignet sind aromatische und cycloaliphatische Dicarbonsäuren, lineare und verzweigte Alkyl- und Alkenyl-Dicarbonsäuren sowie Dimerfettsäuren. Es kommen beispielsweise in Frage: Phthalsäure, Isophthalsäure, Terephthalsäure, Tetrahydrophthalsäure, Hexahydrophthalsäure, Cyclohexandicarbonsäure, Adipinsäure, Bernsteinsäure, Azelainsäure, Sebacinsäure, Glutarsäure, "Chlorendic"-Säure, Tetrachlorphthalsäure, Maleinsäure, Fumarsäure, Itaconsäure, Malonsäure, Korksäure, 2-Methylbernsteinsäure, 3,3-Diäthylglutarsäure, 2,2-Dimethylbernsteinsäure, Octenylbernsteinsäure und Dodecenylbernsteinsäure. Anhydride dieser Säuren sind ebenfalls brauchbar, soweit sie existieren. Die Anhydride werden hier durch den Ausdruck "Säure" mit umfaßt. Es können auch untergeordnete Mengen (Stoffmengenanteil bis zu 10 %, bezogen auf die Stoffmenge aller Säuren) von Monocarbonsäuren, wie Benzoesäure und Hexancarbonsäure verwendet werden. Gesättigte aliphatische oder aromatische Säuren sind bevorzugt, wie Adipinsäure oder Isophthalsäure. Als gegebenenfalls in kleineren Mengen mitzuverwendende Polycarbonsäuren seien hier Trimellithsäure, Trimesinsäure, Pyromellithsäure sowie Polyanhydride, wie in DE 28 11 913 beschrieben, oder Mischungen zweier oder mehrerer solcher Verbindungen genannt.

Die Hydroxycarbonsäuren, die als Reaktionsteilnehmer bei der Herstellung eines Polyesterpolyols mit endständigen Hydroxylgruppen verwendet werden können, sind beispielsweise Hydroxycapronsäure, Hydroxybuttersäure, Hydroxydecansäure, Hydroxystearinsäure. Brauchbare Lactone, die bei der Synthese der Polyesterpolyole eingesetzt werden können, sind unter anderen Caprolacton, Butyrolacton und Valerolacton.

Der Massenanteil an von der Komponente **B** abgeleiteten Bausteinen in dem Polyurethanharz liegt üblicherweise zwischen 15 und 80 %, vorzugsweise zwischen 40 und 60 %, bezogen auf die Masse des Polyurethanharzes.

Die gegebenenfalls zum Aufbau der Polyurethanharze eingesetzten niedermolekularen Polyole C bewirken in der Regel eine Versteifung der Polymerkette. Sie besitzen im allgemeinen eine molare Masse von etwa 60 bis 400 g/mol, vorzugsweise 60 bis 200 g/mol und Hydroxylzahlen von 200 bis 1500 mg/g. Sie können aliphatische, alicyclische oder aromatische Gruppen enthalten. Ihr Massenanteil, soweit sie eingesetzt werden, liegt im allgemeinen bei 0,5 bis 20, vorzugsweise 1 bis 10 %, bezogen auf die Masse der Hydroxylgruppen-haltigen Komponenten **B** bis **D.** Geeignet sind beispielsweise die niedermolekularen Polyole mit bis zu etwa 20 Kohlenstoffatomen je Molekül, z.B. Äthylenglykol, Diäthylenglykol, 1,2-Propandiol, 1,3-Propandiol, 1,4-Butandiol, 1,2- und 1,3-Butylenglykol, 1,2- und 1,4-Cyclohexandiol, 1,4-Cyclohexandimethanol, 1,6-Hexandiol, Bisphenol A (2,2-Bis(4-hydroxyphenyl)propan), hydriertes Bisphenol A (2,2-Bis(4-hydroxycyclohexyl)propan) sowie deren Mischungen, sowie als Triole Trimethyloläthan und -propan. Bevorzugt werden ausschließlich oder zumindest überwiegend (in der Regel mehr als 90 % der Masse, bevorzugt mehr als 95 %) Diole eingesetzt.

Werden bei den Verbindungen **A, B,** und/oder **C** trifunktionelle oder höherfunktionelle Verbindungen eingesetzt, so ist darauf zu achten, daß beim Aufbau des Präpolymeren keine Vergelung eintritt, Dies kann beispielsweise dadurch verhindert werden, daß monofunktionelle Verbindungen gemeinsam mit den tri- oder höherfunktionellen Verbindungen eingesetzt werden, wobei die Menge der monofunktionellen Verbindungen dann vorzugsweise so zu wählen ist, daß die mittlere Funktionalität der betreffenden Komponente 2,3, bevorzugt 2,2, und insbesondere 2,1 nicht übersteigt.

Die anionogenen Verbindungen **D** enthalten mindestens eine, bevorzugt mindestens zwei mit Isocyanaten reaktive gruppen wie Hydroxyl-, Amino- und Mercaptan-Gruppen und mindestens eine Säuregruppe, die bei zumindest teilweiser Neutralisation in wäßriger Lösung oder Dispersion Anionen bildet. Solche Verbindungen sind beispielsweise in den US-Patentschriften 34 12 054 und 36 40 924 sowie in den DE Offenlegungsschriften 26 24 442 und 27 44 544 beschrieben, auf die hier Bezug genommen wird. Insbesondere kommen hierfür solche Polyole, vorzugsweise Diole, in Frage, die wenigstens eine Carboxyl-Gruppe, im allgemeinen 1 bis 3 Carboxyl-Gruppen je Molekül enthalten. Als zur Anionenbildung befähigte Gruppen sind auch Sulfonsäuregruppen oder Phosphonsäuregruppen geeignet. Beispiele für Verbindungen **D** sind insbesondere Dihydroxycarbonsäuren, wie α,α-Dialkylolalkansäuren, insbesondere α,α-Dimethylolalkansäuren wie 2,2-Dimethylolessigsäure, 2,2-Dimethylolpropionsäure, 2,2-Dimethylolbuttersäure, 2,2-Dimethylolpentansäure und die isomeren Weinsäuren, weiterhin Polyhydroxysäuren wie Glukonsäure. Besonders bevorzugt ist dabei 2,2-Dimethylolpropionsäure. Aminogruppenhaltige Verbindungen **D** sind beispielsweise 2,5-Diaminovaleriansäure (Ornithin) und 2,4-Diaminotoluolsulfonsäure-(5). Es können auch Gemische der genannten Verbindungen **D** zum Einsatz kommen. Der Massenanteil der von der Komponente **D** abgeleiteten Bausteine in dem Polyurethanharz liegt im allgemeinen bei 2 bis 20, vorzugsweise bei 4 bis 10 %, bezogen auf die Masse des Polyurethanharzes.

Die Verbindungen E befinden sich überwiegend, vorzugsweise zu 70 bis 90 %, jeweils an den Kettenenden der Moleküle und schließen diese ab (Kettenstopper). Sie sind ebenfalls niedermolekular (Mₙ wie bei den Polyolen **C).** Geeignete Polyole besitzen mindestens drei, vorzugsweise 3 oder 4 Hydroxylgruppen im Molekül. Genannt seien hier beispielsweise Glycerin, Hexantriol, Pentaerythrit, Dipentaerythrit, Diglycerin, Trimethyloläthan und Trimethylolpropan, wobei letzteres bevorzugt ist. Als Kettenstopper wird die Komponente **E** im Überschuß eingesetzt, also in einer solchen Menge, daß die Anzahl der Hydroxylgruppen in der eingesetzten Menge der Komponente E die der noch vorhandenen Isocyanatgruppen im Präpolymeren **ABCD** übersteigt. Der Massenanteil an von der Komponente E abgeleiteten Bausteine im Polyurethanharz liegt üblicherweise zwischen 2 und 15, vorzugsweise 5 bis 15 %, bezogen auf die Masse des Polyurethanharzes. Gegebenenfalls finden sich die von der Komponente E abgeleiteten Bausteine in Mischung mit den Bausteinen abgeleitet von F und/oder G im Polyurethanharz.

Die Verbindungen **F** sind monofunktionelle, mit NCO Gruppen reaktive Verbindungen, wie Monoamine, insbesondere mono-sekundäre Amine, oder Monoalkohole. Genannt seien hier beispielsweise: Methylamin, Äthylamin, n-Propylamm, n-Butylamin, n-Octylamin, Laurylamin, Stearylamin, Isononyloxypropylamin, Dimethylamin, Diäthylamin, Di-n- und Diisopropylamin, Di-n-butylamin, N-Methylaminopropylamin, Diäthyl- und Dimethylaminopropylamin, Morpholin, Piperidin, bzw. geeignet substituierte Derivate davon, Amidoamine aus diprimären Aminen und Monocarbonsäuren, sowie Monoketimine von diprimären Aminen, und primär/tertiäre Amine, wie N,N-Dimethylaminopropylamin.

Vorzugsweise kommen für **F** auch Verbindungen in Betracht, die aktiven Wasserstoff mit gegenüber NCO-Gruppen unterschiedlicher Reaktivität enthalten, insbesondere Verbindungen, die neben einer primären Aminogruppe auch sekundäre Aminogruppen, oder neben einer OH-Gruppe auch COOH-Gruppen oder neben einer Aminogruppe (primär oder sekundär) auch OH-Gruppen aufweisen, wobei die letzteren besonders bevorzugt sind.

Beispiele hierfür sind: primäre/sekundäre Amine, wie 3-Amino-1-methylaminopropan, 3-Amino-1-äthylaminopropan, 3-Amino-1-cyclohexylaminopropan, 3-Amino-1-methylaminobutan; Mono-Hydroxycarbonsäuren, wie Hydroxyessigsäure, Milchsäure oder Äpfelsäure, weiterhin Alkanolamine wie N-Aminoäthyläthanolamin, Äthanolamin, 3-Aminopropanol, Neopentanolamin und besonders bevorzugt Diäthanolamin. Gegebenenfalls können auch solche Verbindungen **F** eingesetzt werden, die außer den gegenüber Isocyanatgruppen reaktiven Gruppen noch olefinische Doppelbindungen enthalten. Die so erhaltenen Polyurethane können nach dem Aufbringen auf ein Substrat durch Einwirkung von energiereicher Strahlung wie UV-Strahlen oder Elektronenstrahlen vernetzt werden.

Auf diese Weise können, ebenso wie der Verwendung der Verbindungen **E,** zusätzliche funktionelle Gruppen in das polymere Endprodukt eingebracht und dieses damit reaktionsfähiger gegenüber Materialien, wie Härtern, gemacht werden, falls dies gewünscht ist. Der Massenanteil an von der Komponente F abgeleiteten Bausteine in dem Polyurethanharz liegt üblicherweise zwischen 2 und 20, vorzugsweise 3 und 10 %, bezogen auf die Masse des Polyurethanharzes.

Die Verbindungen G sind die sogenannten Kettenverlängerer. Als solche kommen die hierfür bekannten, mit NCO-Gruppen reaktiven und vorzugsweise difunktionellen Verbindungen in Frage, die nicht identisch mit **B, C, D, E** und **F** sind und zumeist zahlenmittlere molare Massen bis zu 400 g/mol aufweisen. Genannt seien hier beispielsweise Wasser, Hydrazin, Dihydrazide von Dicarbonsäuren wie Adipinsäuredihydrazid, Diamine wie Äthylendiamin, 1,3-Diaminopropan, 1,4-Diaminobutan, Hexamethylendiamin, wobei die Amine auch Substituenten, wie OH-Gruppen, tragen können. Solche Polyamine sind beispielsweise in der DE-Offenlegungsschrift 36 44 371 beschrieben. Der Massenanteil an von der Komponente **G** abgeleiteten Bausteine in dem Polyurethanharz liegt üblicherweise zwischen 1 und 10, vorzugsweise 2 und 5 %, bezogen auf die Masse des Polyurethanharzes.

Die Herstellung des erfindungsgemäßen Polyurethanharzes erfolgt bevorzugt in der Weise, daß man aus den Polyisocyanaten A, den Polyolen gemäß B und gegebenenfalls den niedermolekularen Polyolen **C** sowie den Verbindungen **D** zunächst ein Polyurethan-Präpolymeres herstellt, das im Mittel mindestens 1,7, vorzugsweise 2 bis 2,5 freie Isocyanatgruppen pro Molekül enthält, dieses Präpolymere dann mit den Verbindungen E und/oder **F** gegebenenfalls in Abmischung mit geringen Mengen an Verbindungen **G,** in einem nicht-wäßrigen System umsetzt, wobei die Komponente **E** im stöchiometrischen Überschuß (Anzahl der Hydroxylgruppen in **E** ist größer als die Anzahl der Isocyanatgruppen in dem im ersten Schritt hergestellten Präpolymer) eingesetzt wird, und das vollständig ausreagierte Polyurethanharz vorzugsweise abschließend neutralisiert und ins wäßrige System überführt. Gegebenenfalls kann auch die Umsetzung mit **G** nach der Überführung ins wäßrige System erfolgen. Das Präpolymer soll dabei bereits hochmolekular sein, bevorzugt weist es einen Staudinger-Index *J*₀ von mindestens 20 cm³/g, bevorzugt mindestens 23 cm³/g und besonders bevorzugt mindestens 26 cm³/g auf.

Die Herstellung des Polyurethan-Präpolymeren im ersten Schritt erfolgt dabei nach den bekannten Verfahren. Hierbei wird das mehrfunktionelle Isocyanat A gegenüber den Polyolen **B** bis D im Überschuß eingesetzt, so daß ein Produkt mit freien Isocyanatgruppen resultiert. Diese Isocyanatgruppen sind end- und/oder seitenstandig, vorzugsweise endständig. Zweckmäßigerweise ist dabei die Menge an Polyisocyanat **A** so groß, daß das Verhältnis der Anzahl von Isocyanatgruppen in der eingesetzten Menge der Komponente **A** zur Gesamtzahl der OH-Gruppen in den eingesetzten Polyolen **B** bis **D** 1,05 bis 1,4, vorzugsweise 1,1 bis 1,3 beträgt.

Die Umsetzung zur Herstellung des Präpolymeren wird normalerweise bei Temperaturen von 60 bis 95 °C, vorzugsweise 60 bis 75 °C, je nach Reaktivität des eingesetzten Isocyanats, durchgeführt, in der Regel ohne Anwesenheit eines Katalysators, jedoch vorzugsweise in Gegenwart von gegenüber Isocyanaten inaktiven Lösungsmitteln. Hierfür kommen insbesondere solche Lösungsmittel in Betracht, die mit Wasser verträglich sind, wie die weiter unten genannten Äther, Ketone und Ester sowie N-Methylpyrrolidon. Der Massenanteil dieses Lösungsmittels überschreitet zweckmäßigerweise nicht 30 %, und liegt vorzugsweise im Bereich von 5 bis 20 %, jeweils bezogen auf die Summe aus den Massen des Polyurethanharzes und des Lösungsmittels. Zweckmäßigerweise wird dabei das Polyisocyanat der Lösung der übrigen Komponenten zugegeben. Es besteht jedoch ebenfalls die Möglichkeit, zunächst das Polyisocyanat **A** zu dem Polyol **B** und gegebenenfalls **C** zuzugeben und das so erzeugte Präpolymer **ABC** mit der Komponente **D,** die in einem gegenüber Isocyanaten inaktiven Lösungsmittel, vorzugsweise N-Methylpyrrolidon oder Ketone, gelöst ist, zu dem Präpolymer **ABCD** umzusetzen.

Das Präpolymere **ABCD** bzw. dessen Lösung wird dann mit Verbindungen gemäß E und/oder **F,** gegebenenfalls in Abmischung mit **G,** umgesetzt, wobei die Temperatur zweckmäßigerweise im Bereich von 50 bis 130 °C, vorzugsweise zwischen 70 und 110 °C liegt, bis der NCO-Gehalt in der Reaktionsmischung praktisch auf Null abgesunken ist. Falls die Verbindung **E** eingesetzt wird, so wird diese im Überschuß (Anzahl der Hydroxylgruppen in **E** übersteigt die Anzahl der Isocyanatgruppen im Präpolymer **ABCD)** zugegeben. Die Menge an E liegt dabei zweckmäßigerweise so, daß das Verhältnis der Anzahl von NCO-Gruppen im Präpolymeren ABCD bzw. des vorher gegebenenfalls schon mit Verbindungen gemäß **F** und/oder **G** umgesetzten Präpolymeren **ABCD(F/G)** zur Anzahl der reaktiven Gruppen von **E** 1:1,05 bis 1:5, vorzugsweise 1:1 bis 1:3 beträgt. Die Masse an **F** und/oder **G** kann dabei 0 bis 90 %, vorzugsweise 0 bis 20 %, bezogen auf die Masse von E betragen.

Ein Teil der in dem so hergestellten Polyurethan gebundenen (nicht neutralisierten) Säuregruppen, vorzugsweise 5 bis 30 %, kann gegebenenfalls mit difunktionellen mit Säuregruppen reaktiven Verbindungen, wie Diepoxiden, umgesetzt werden.

Zur Neutralisation des resultierenden, vorzugsweise COOH-Gruppen enthaltenden Polyurethans sind insbesondere tertiäre Amine geeignet, z.B. Trialkylamine mit 1 bis 12, vorzugsweise 1 bis 6 C-Atomen in jedem Alkylrest. Beispiele hierfür sind Trimethylamin, Triäthylamin, Methyldiäthylamin, Tripropylamin. Die Alkylreste können beispielsweise auch Hydroxylgruppen tragen, wie bei den Dialkylmonoalkanol-, Alkyldialkanol- und Trialkanolaminen. Beispiel hierfür ist Dimethyläthanolamin, das bevorzugt als Neutralisationsmittel dient.

Wird die Kettenverlängerung in organischer Phase durchgeführt, oder werden Neutralisation und Kettenverlängerung zusammen mit der Dispergierung in einem Schritt durchgeführt, so sind als Neutralisationsmittel gegebenenfalls auch anorganische Basen, wie Ammoniak oder Natrium- bzw. Kaliumhydroxid einsetzbar.

Das Neutralisationsmittel wird zumeist in solchen Mengen eingesetzt, daß das Verhältnis der Stoffmenge von Amingruppen bzw. in wäßriger Lösung gebildeten Hydroxylionen zur Stoffmenge der Säuregruppen des Präpolymeren ca. 0,3:1 bis 1,3:1, vorzugsweise ca. 0,5:1 bis 1:1 beträgt.

Die Neutralisation, die in der Regel zwischen Raumtemperatur und 110 °C erfolgt, kann in beliebiger Weise durchgeführt werden, z.B. so, daß das wasserhaltige Neutralisationsmittel dem Polyurethanharz zugegeben wird oder umgekehrt. Es ist aber auch möglich, daß man zuerst das Neutralisationsmittel dem Polyurethanharz zufügt und danach erst das Wasser. Im allgemeinen erhält man so einen Festkörper-Massenanteil in der Dispersion von 20 bis 70 %, bevorzugt 30 bis 50 %.

Das erfindungsgemäße Polyurethanharz eignet sich als Alleinbindemittel oder auch in Mischung mit anderen Bindemitteln wie den üblichen niedermolekulareren Polyurethanharzen oder anderen wäßrigen physikalisch trocknenden oder durch Zusatz von bei Raumtemperatur oder erhöhter Temperatur wirksamen Härtern zur Formulierung von wäßrigen Beschichtungsmitteln. Der Massenanteil an dem erfindungsgemäßen Polyurethanharz in der wäßrigen Überzugsmasse beträgt im allgemeinen 5 bis 40, vorzugsweise 15 bis 30 %, bezogen auf die Masse der gesamten Überzugsmasse.

Es ist ebenfalls möglich, bei Verwendung des erfindungsgemäßen Polyurethanharzes als Alleinbindemittel einen Härter wie mehrfunktionelle Isocyanate (Härtung bei Raumtemperatur oder leicht erhöhter Temperatur) zuzugeben, um die Härtungsgeschwindigkeit zu erhöhen. Auch die Formulierung als wärmehärtendes Ein-Komponenten-Bindemittel mit Aminharzen oder blockierten Isocyanaten als Härter ist möglich und vorteilhaft.

Zur Formulierung von wäßrigen Beschichtungsmitteln werden der wäßrigen Dispersion des Polyurethanharzes die üblichen Hilfs- und Zusatzmittel der Lacktechnologie einverleibt. Hierzu gehören zum Beispiel Entschäumungsmittel, Verlaufshilfsmittel, Pigmente und Dispergierhilfsmittel für die Pigmentverteilung.

Die so erhaltenen erfindungsgemäßen Überzugsmittel eignen sich für praktisch alle Einsatzgebiete, in denen heute lösungsmittelhaltige, lösungsmittelfreie oder andersartige wäßrige Anstrich- und Beschichtungssysteme mit einem erhöhten Eigenschaftsprofil Verwendung finden, wobei die zu beschichtenden Substrate zum Beispiel aus Metall, mineralischen Baustoffen, wie Kalk, Zement oder Gips, Faser-Zement-Baustoffe, Beton, Holz oder Holzwerkstoffen, Papier, Asphalt, Bitumen, Kunststoffen diverser Art, Textilien oder Leder bestehen können. Bei den metallenen Substraten handelt es sich in-allen Fällen bevorzugt um Automobile.

Die damit hergestellten Überzüge zeichnen sich aus durch drastisch erhöhte Zähigkeit und Elastizität, sowie verbesserte Chemikalienbeständigkeit und niedrigen Abrieb aus. Hervorzuheben ist auch die erheblich höhere Antrocknungsgeschwindigkeit, die mit den erfindungsgemäßen Polyurethanharz-Dispersionen zu erreichen ist: diese liegt im Vergleich zu den bekannten Polyurethan-Dispersionen um einen Faktor 10 bis 100 höher.

### Beispiele

### Beispiel 1

132 g Adipinsäure, 72 g Isophthalsäure, 142 g 1,6-Hexandiol und 42 g Neopentylglykol wurden in einem 1L-Glasrundkolben vorgelegt und unter Abdestillieren des Reaktionswassers langsam auf 250 °C erhitzt. Bei dieser Temperatur wurde so lange gehalten, bis die Säurezahl unter 10 mg/g lag. Dann wurde unter vermindertem Druck weiterkondensiert, bis die Säurezahl unter 2 mg/g lag. Man erhielt einen klaren Polyester mit einer Hydroxylzahl von ca. 77 mg/g.

### Beispiel 2

213 g des Polyesters aus Beispiel 1, 26,8 g Dimethylolpropionsäure und 10,4 g Neopentylglykol wurden zusammen in 65,3 g N-Methylpyrrolidon bei 100 °C gelöst. Zu dieser Lösung wurden 119,4 g Isophorondiisocyanat gegeben; es wurde bei dieser Temperatur so lange gehalten, bis ein Staudinger-Index ("Grenzviskosität") von 28 bis 30 cm³/g erreicht war. Die Mischung wurde dann auf 95 °C gekühlt, es wurden 10 g Triäthylamin zugegeben und durch Rühren homogenisiert. Diese Lösung wurde anschließend mit 410 g entionisiertem Wasser mit einer Temperatur von ca. 80 °C innerhalb von weniger als 10 min dispergiert und sofort mit einer Lösung aus 3,1 g Äthylendiamin in 73 g entionisiertem Wasser versetzt. Nach einer Homogenisierungsphase von 1 Stunde wurde der Ansatz gekühlt. Man erhielt eine feinteilige Dispersion mit einem Massenanteil an nichtflüchtigen Stoffen von 36 %, einer Viskosität von ca. 2300 mPa·s und einem pH-Wert von ca. 7,6. Die Säurezahl des Harzes betrug ca. 30 mg/g, durch Gelpermeationschromatographie gegen Polystyrol-Standards wurden die zahlenmittlere molare Masse Mₙ zu 20,9 kg/mol und die gewichtsmittlere molare Masse M_{w} zu 41,3 kg/mol bestimmt.

### Beispiel 3

213 g des Polyesters aus Beispiel 1, 1,3 g Äthylenglykol, 26,8 g Dimethylolpropionsäure und 8,3 g Neopentylglykol wurden in 150 g Methylisobutylketon bei ca. 60 °C gemischt. Dazu wurden 119 g Isophorondiisocyanat gegeben und die erhaltene Mischung auf 100 bis 120 °C erhitzt. Bei dieser Temperatur wurde so lange gehalten, bis ein Staudinger-Index ("Grenzviskosität") von 28 bis 30 cm³/g erreicht war (nach ca. 4,5 h). Dann wurde die Lösung auf 95 °C gekühlt und mit 12,6 g Triäthylamin versetzt. Nach Homogenisierung wurde mit 808 g entionisiertem Wasser mit einer Temperatur von ca. 80 °C dispergiert. Sofort danach wurde eine Lösung aus 3,1 g Äthylendiamin in 100 g entionisiertem Wasser zugegeben. Nach einer Haltezeit von 30 min bei 80 °C wurde unter leicht vermindertem Druck 337 g eines Gemisches aus Methylisobutylketon und Wasser abdestilliert. Nach dem Abkühlen erhielt man eine feinteilige Dispersion mit einem Festkörper-Massenanteil von 34 %, einer Viskosität von ca. 800 mPa·s und einem pH-Wert von ca. 8,1. Die Säurezahl des Harzes betrug ca. 30 mg/g, es wurde eine zahlenmittlere molare Masse Mₙ von über 20 kg/mol und einen gewichtsmittlere molare Masse M_{w} von über 40 kg/mol bestimmt.

### Beispiel 4

213 g des Polyesters aus Beispiel 1, 26,8 g Dimethylolpropionsäure und 10,4 g Neopentylglykol wurden in 123 g Methylisobutylketon bei ca. 60°C gemischt. Zu dieser Mischung wurde 119 g Isophorondiisocyanat gegeben und bei 58 - 60°C so lange gehalten, bis ein Staudinger-Index ("Grenzviskosität") von 28 bis 30 cm³/g erreicht war (nach ca. 29 h). Dann wurde die Lösung mit 11,7 g Triäthylamin versetzt. Nach einer Homogenisierung wurde mit 683 g entionisiertem Wasser mit einer Temperatur von ca. 60 °C dispergiert. Sofort danach wurde eine Lösung aus 3,1 g Äthylendiamin in 100 g entionisiertem Wasser zugegeben. Nach einer Haltezeit von 60 min bei 60 °C wurde unter vermindertem Druck 195 g eines Gemisches aus Methylisobutylketon und Wasser abdestilliert. Nach dem Abkühlen erhielt man eine feinteilige Dispersion mit einem Festkörper-Massenanteil von 34 %, einer Viskosität von ca. 200 mPa·s und einem pH-Wert von ca. 7,9. Es wurde einen Säurezahl von ca. 30 mg/g, eine zahlenmittlere molare Masse Mₙ von über 20 kg/mol und eine gewichtsmittlere molare Masse M_{w} von über 40 kg/mol bestimmt.

## Patentansprüche

1. In Wasser dispergierbares Polyurethanharz, enthaltend Bausteine abgeleitet von Polyisocyanaten **A,** Polyolen **B** mit einer zahlenmittleren molaren Masse Mₘ von mindestens 400 g/mol, gegebenenfalls niedermolekularen Polyolen **C** mit Mₙ unter 400 g/mol, Verbindungen **D,** die mindestens zwei gegenüber Isocyanatgruppen reaktive Gruppen und mindestens eine zur Anionenbildung befähigte Gruppe aufweisen, niedermolekularen Polyolen **E,** die gegenüber Isocyanatgruppen keine weiteren reaktiven Gruppen tragen, Verbindungen F, die gegenüber Isocyanaten monofunktionell sind oder aktiven Wasserstoff unterschiedlicher Reaktivität enthalten und von den Verbindungen E verschieden sind, sowie gegebenenfalls Verbindungen **G**, die von **B, C, D, E** und **F** verschieden sind und mindestens zwei mit NCO-Gruppen reaktive Gruppen enthalten, **dadurch gekennzeichnet, daß** die zahlenmittlere molare Masse Mₙ mindestens 20 kg/mol, die gewichtsmittlere molare Masse M_{w} mindestens 40 kg/mol, und die Säurezahl 25 mg/g bis 50 mg/g beträgt, und daß der Massenanteil der von den Polyolen B abgeleiteten Bausteine von 15 % bis 60 % der Masse des Polyurethanharzes beträgt.

2. Polyurethanharz nach Anspruch 1, **dadurch gekennzeichnet, daß** seine zahlenmittlere molare Masse Mₙ mindestens 25 kg/mol beträgt.

3. Polyurethanharz nach Anspruch 1, **dadurch gekennzeichnet, daß** die Isocyanate **A** mindestens difunktionell sind und aliphatische lineare, verzweigte oder cyclische sowie aromatische Isocyanate sein können, wobei aromatische Isocyanate nur in Kombination mit den genannten aliphatischen Isocyanaten eingesetzt sind.

4. Polyurethanharz nach Anspruch 3, **dadurch gekennzeichnet, daß** die von den Isocyanaten **A** abgeleiteten Bausteine in einem Massenanteil von 10 bis 50 % in dem Polyurethanharz vorliegen.

5. Polyurethanharz nach Anspruch 1, **dadurch gekennzeichnet, daß** die Polyole **B** eine Hydroxylzahl von 30 bis 280 mg/g besitzen und ausgewählt sind aus der Gruppe der Polyesterpolyole, der Polyätherpolyole, der Polycarbonatpolyole, der Polyacrylatpolyole und der Epoxidharz-Polyole.

6. Polyurethanharz nach Anspruch 5, **dadurch gekennzeichnet, daß** die von den Polyolen **B** abgeleiteten Bausteine in einem Massenanteil von 40 % bis 60 % in dem Polyurethanharz vorliegen.

7. Polyurethanharz nach Anspruch 1, **dadurch gekennzeichnet, daß** die Polyole **C** ausgewählt sind aus Äthylenglykol, Diäthylenglykol, 1,2-Propandiol, 1,3-Propandiol, 1,4-Butandiol, 1,2- und 1,3-Butylenglykol, Neopentylglykol, 1,2- und 1,4-Cyclohexandiol, 1,4-Cyclohexandimethanol, 1,6-Hexandiol, Bisphenol **A** (2,2-Bis(4-hydroxyphenyl)propan), hydriertes Bisphenol A (2,2-Bis(4-hydroxycyclohexyl)propan) sowie deren Mischungen.

8. Polyurethanharz nach Anspruch 7, **dadurch gekennzeichnet, daß** die von den Polyolen C abgeleiteten Bausteine in einem Massenanteil von 0,5 bis 20 % in dem Polyurethanharz vorliegen.

9. Polyurethanharz nach Anspruch 1, **dadurch gekennzeichnet, daß** anionogenen Verbindungen **D** ausgewählt sind aus den Dihydroxycarbonsäuren 2,2-Dimethylolessigsäure, 2,2-Dimethylolpropionsäure, 2,2-Dimethylolbuttersäure, 2,2-Dimethylolpentansäure und den isomeren Weinsäuren, aus Glukonsäure und den Aminogruppen-haltigen Verbindungen 2,5-Diaminovaleriansäure (Ornithin) und 2,4-Diaminotoluolsulfonsäure-(5).

10. Polyurethanharz nach Anspruch 9, **dadurch gekennzeichnet, daß** die von den anionogenen Verbindungen **D** abgeleiteten Bausteine in einem Massenanteil von 2 bis 20 % in dem Polyurethanharz vorliegen.

11. Polyurethanharz nach Anspruch 1, **dadurch gekennzeichnet, daß** die Komponente **E** ausgewählt ist aus Glycerin, Hexantriol, Pentaerythrit, Dipentaerythrit, Diglycerin, Trimethyloläthan und Trimethylolpropan.

12. Polyurethanharz nach Anspruch 11, **dadurch gekennzeichnet, daß** die von den Verbindungen **E** abgeleiteten Bausteine in einem Massenanteil von 2 bis 15 % in dem Polyurethanharz vorliegen.

13. Polyurethanharz nach Anspruch 1, **dadurch gekennzeichnet, daß** die Verbindungen F ausgewählt sind aus monofunktionellen mono-sekundären Aminen und Monoalkoholen, Verbindungen, die aktiven Wasserstoff mit gegenüber NCO-Gruppen unterschiedlicher Reaktivität enthalten, und Verbindungen, die außer der gegenüber Isocyanatgruppen reaktiven Gruppe noch eine oder mehrere olefinische Doppelbindungen enthalten.

14. Polyurethanharz nach Anspruch 13, **dadurch gekennzeichnet, daß** die von den Verbindungen **F** abgeleiteten Bausteine in einem Massenanteil von 2 bis 20 % in dem Polyurethanharz vorliegen.

15. Polyurethanharz nach Anspruch 1, **dadurch gekennzeichnet, daß** die Verbindungen F ausgewählt sind aus den difunktionellen Verbindungen Wasser, Hydrazin, und den Diaminen Äthylendiamin, 1,3-Diaminopropan, 1,4-Diaminobutan, Hexamethylendiamin, wobei die Amine auch Substituenten, wie OH-Gruppen, tragen können.

16. Polyurethanharz nach Anspruch 15, **dadurch gekennzeichnet, daß** die von den Verbindungen G abgeleiteten Bausteine in einem Massenanteil von 1 bis 10 % in dem Polyurethanharz vorliegen.

17. Verfahren zur Herstellung von Polyurethanharzen nach Anspruch 1, **dadurch gekennzeichnet, daß** nacheinander die folgenden Schritte ausgeführt werden:
- Synthese eines Isocyanat-funktionellen Präpolymeren durch Umsetzung von Polyisocyanaten **A** mit Polyolen **B** mit einer zahlenmittleren molaren Masse Mₙ von mindestens 400 g/mol, gegebenenfalls niedermolekularen Polyolen **C** und Verbindungen **D,** die mindestens zwei gegenüber Isocyanatgruppen reaktive Gruppen und mindestens eine zur Anionenbildung befähigte Gruppe aufweisen, zu einem freie NCO-Gruppen enthaltenden Präpolymeren, das einen Staudinger-Index *J*₀ von mindestens 20 cm³/g aufweist,
- zumindest teilweise Neutralisation der zur Anionenbildung befähigten Gruppe der Verbindung **D** unter Bildung von anionischen Gruppen, und Dispergierung dieses Präpolymeren **ABCD** in Wasser und
- Umsetzung des neutralisierten Präpolymeren mit mindestens einer der Komponenten ausgewählt aus niedermolekularen Polyolen **E,** die gegenüber Isocyanatgruppen keine weiteren reaktiven Gruppen tragen, wobei diese Verbindungen in einer solchen Menge eingesetzt werden, daß die Anzahl der Hydroxylgruppen in der eingesetzten Menge der Komponente **E** die der-noch vorhandenen Isocyanatgruppen im Präpolymeren **ABCD** übersteigt., Verbindungen **F,** die gegenüber Isocyanaten monofunktionell sind oder aktiven Wasserstoff unterschiedlicher Reaktivität enthalten und von den Verbindungen **E** verschieden sind, sowie gegebenenfalls Verbindungen **G,** die von **B, C, D, E** und **F** verschieden sind und mindestens zwei mit NCO-Gruppen reaktive Gruppen enthalten.

18. Verwendung der Polyurethanharze gemäß Anspruch 1 als Bindemittel in physikalisch trocknenden Lacken, wobei das Polyurethanharz in Wasser dispergiert wird und diesem Entschäumungsmittel und Verlaufshilfsmittel sowie gegebenenfalls Pigmente und Dispergiermittel für Pigmente sowie gegebenenfalls weitere wäßrige Bindemittel zugesetzt werden.

19. Verwendung der Polyurethanharze gemäß Anspruch 1 in wärmehärtenden Ein-Komponenten-Lacken, wobei das Polyurethanharz in Wasser dispergiert wird und ein in der Wärme wirksamer Härter ausgewählt aus Aminharzen und blockierten Isocyanaten zugemischt wird.

20. Verwendung der Polyurethanharze gemäß Anspruch 1 in Zwei-Komponenten-Lacken, wobei das Polyurethanharz in Wasser dispergiert wird und ein bei Raumtemperatur wirksamer Härter ausgewählt aus unblockierten linearen, verzweigten und cyclischen aliphatischen Isocyanaten unmittelbar vor der Verarbeitung zugemischt wird.

## Claims

1. A water-dispersible polyurethane resin comprising building blocks derived from polyisocyanates **A,** polyols **B** having a number-average molar mass Mₙ of at least 400 g/mol, where appropriate, low molar mass polyols **C** with Mₙ below 400 g/mol, compounds D which possess at least two groups which are reactive toward isocyanate groups and at least one group which is capable of forming anions, low molar mass polyols **E** which in relation to isocyanate groups carry no further reactive groups, compounds **F,** which are monofunctional toward isocyanates or contain active hydrogen of different reactivity and are different than the compounds **E** and also, where appropriate, compounds G, which are different than **B, C, D, E** and **F** and contain at least two groups which are reactive with NCO groups, wherein the number-average molar mass Mₙ is at least 20 kg/mol, the weight-average molar mass M_{w} is at least 40 kg/mol, and the acid number is from 25 mg/g to 50 mg/g, and wherein the mass fraction of the building blocks derived from the polyols **B** is from 15% to 60% of the mass of the polyurethane resin.

2. The polyurethane resin as claimed in claim 1, whose number-average molar mass Mₙ is at least 25 kg/mol.

3. The polyurethane resin as claimed in claim 1, wherein the isocyanates **A** are at least difunctional and may be aliphatic linear, branched or cyclic and also aromatic isocyanates, aromatic isocyanates being used only in combination with the aliphatic isocyanates mentioned.

4. The polyurethane resin as claimed in claim 3, wherein the building blocks derived from the isocyanates **A** are present in a mass fraction of from 10 to 50% in the polyurethane resin.

5. The polyurethane resin as claimed in claim 1, wherein the polyols **B** possess a hydroxyl number of from 30 to 280 mg/g and are selected from the group of polyester polyols, polyether polyols, polycarbonate polyols, polyacrylate polyols, and epoxy resin polyols.

6. The polyurethane resin as claimed in claim 5, wherein the building blocks derived from the polyols **B** are present in a mass fraction of from 40% to 60% in the polyurethane resin.

7. The polyurethane resin as claimed in claim 1, wherein the polyols **C** are selected from ethylene glycol, diethylene glycol, 1,2-propanediol, 1,3-propanediol, 1,4-butanediol, 1,2- and 1,3-butylene glycol, neopentyl glycol, 1,2- and 1,4-cyclohexanediol, 1,4-cyclohexanedimethanol, 1,6-hexanediol, bisphenol A (2,2-bis(4-hydroxyphenyl)propane), hydrogenated bisphenol A (2,2-bis(4-hydroxycyclohexyl)propane), and mixtures thereof.

8. The polyurethane resin as claimed in claim 7, wherein the building blocks derived from the polyols **C** are present in a mass fraction of from 0.5 to 20% in the polyurethane resin.

9. The polyurethane resin as claimed in claim 1, wherein anionogenic compounds **D** are selected from the dihydroxy carboxylic acids 2,2-dimethylolacetic acid, 2,2-dimethylolpropionic acid, 2,2-dimethylolbutyric acid, 2,2-dimethylolpentanoic acid, and the isomeric tartaric acids, from gluconic acid and from the amino-containing compounds 2,5-diaminovaleric acid (ornithine) and 2,4-diaminotoluene-5-sulfonic acid.

10. The polyurethane resin as claimed in claim 9, wherein the building blocks derived from the anionogenic compounds D are present in a mass fraction of from 2 to 20% in the polyurethane resin.

11. The polyurethane resin as claimed in claim 1, wherein component **E** is selected from glycerol, hexanetiol, pentaerythritol, dipentaerythritol, diglycerol, trimethyolethane, and trimethylolpropane.

12. The polyurethane resin as claimed in claim 11, wherein the building blocks derived from the compounds E are present in a mass fraction of from 2 to 15% in the polyurethane resin.

13. The polyurethane resin as claimed in claim 1, wherein the compounds **F** are selected from monofunctional mono-secondary amines and monoalcohols, compounds which contain active hydrogen with different reactivity toward NCO groups, and compounds which in addition to the isocyanate-reactive group contain one or more olefinic double bonds.

14. The polyurethane resin as claimed in claim 13, wherein the building blocks derived from the compounds **F** are present in a mass fraction of from 2 to 20% in the polyurethane resin.

15. The polyurethane resin as claimed in claim 1, wherein the compounds **F** are selected from the difunctional compounds water, hydrazine, and the diamines ethylenediamine, 1,3-diaminopropane, 1,4-diaminobutane, and hexamethylenediamine, it being possible for the amines to carry substituents, such as OH groups, as well.

16. The polyurethane resin as claimed in claim 15, wherein the building blocks derived from the compounds G are present in a mass fraction of from 1 to 10% in the polyurethane resin.

17. A process for preparing a polyurethane resin as claimed in claim 1, which comprises performing the following steps in succession:
- synthesizing an isocyanate-functional prepolymer by reacting polyisocyanates **A** with polyols **B** having a number-average molar mass Mₙ of at least 400 g/mol, where appropriate, low molar mass polyols C, and compounds D which contain at least two isocyanate-reactive groups and at least one group capable of forming anions, to give a prepolymer which contains free NCO groups and has a Staudinger index *J*₀ of at least 20 cm³/g,
- at least partly neutralizing the group capable of forming anions in the compound **D,** to form anionic groups, dispersing this prepolymer **ABCD** in water, and
- reacting the neutralized prepolymer with at least one of the components selected from low molar mass polyols **E** which in relation to isocyanate groups carry no further reactive groups, these compounds being used in such an amount that the number of hydroxyl groups in the amount of component E used exceeds the number of isocyanate groups still present in the prepolymer **ABCD,** compounds **F** which are monofunctional toward isocyanates or contain active hydrogen of different reactivity and are different than the compounds **E,** and also, where appropriate, compounds **G,** which are different than **B, C, D, E,** and **F** and contain at least two groups which are reactive with NCO groups.

18. The use of a polyurethane resin as claimed in claim 1 as a binder in physically drying paints, the polyurethane resin being dispersed in water and being admixed with defoamers and leveling assistants and also, where appropriate, pigments and pigment dispersants and also, where appropriate, further aqueous binders.

19. The use of a polyurethane resin as claimed in claim 1 in thermosetting one-component paints, the polyurethane resin being dispersed in water and a thermally active curative selected from amine resins and blocked isocyanates being admixed.

20. The use of a polyurethane resin as claimed in claim 1 in two-component paints, the polyurethane resin being dispersed in water and a curative which is active at room temperature and is selected from nonblocked linear, branched, and cyclic aliphatic isocyanates being admixed immediately prior to processing.

## Revendications

1. Résine de polyuréthanne dispersible dans l'eau, contenant des composants qui dérivent de polyisocyanates A, de polyols B ayant une masse moléculaire moyenne en nombre Mₙ d'au moins 400 g/mol, éventuellement de polyols C à faible masse moléculaire ayant une Mₙ inférieure à 400 g/mol, de composés D qui comportent au moins deux groupes réactifs vis-à-vis des groupes isocyanate et au moins un groupe pouvant former des anions, de polyols E à faible masse moléculaire, qui ne portent pas d'autres groupes réactifs vis-à-vis des groupes isocyanate, de composés F, qui sont monofonctionnels vis-à-vis des isocyanates, ou encore contiennent de l'hydrogène actif ayant une réactivité différente, et qui sont différents des composés E, et éventuellement de composés G, qui sont différents de B, C, D, E et F, et qui contiennent au moins deux groupes réactifs avec les groupes NCO, **caractérisée en ce que** la masse moléculaire moyenne en nombre Mₙ est d'au moins 20 kg/mol, la masse moléculaire moyenne en masse M_{w} est d'au moins 40 kg/mol, et l'indice d'acide est de 25 à 50 mg/g, et **en ce que** la proportion en masse des composants qui dérivent des polyols B est de 15 à 60 % de la masse de la résine de polyuréthanne.

2. Résine de polyuréthanne selon la revendication 1, **caractérisée en ce que** sa masse moléculaire moyenne en nombre Mₙ est d'au moins 25 kg/mol.

3. Résine de polyuréthanne selon la revendication 1, **caractérisée en ce que** les isocyanates A sont au moins difonctionnels et peuvent être des isocyanates aliphatiques, à chaîne droite ou ramifiée, ou cyclique, ainsi que des isocyanates aromatiques, les isocyanates aromatiques n'étant utilisés qu'en combinaison avec les isocyanates aliphatiques mentionnés.

4. Résine de polyuréthanne selon la revendication 3, **caractérisée en ce que** les composants qui dérivent des isocyanates A sont présents selon une proportion en masse de 10 à 50 % dans la résine de polyuréthanne.

5. Résine de polyuréthanne selon la revendication 1, **caractérisée en ce que** les polyols B ont un indice d'hydroxyle de 30 à 280 mg/g et sont choisis dans le groupe des polyesterpolyols, des polyétherpolyols, des polycarbonates polyols, des polyacrylates polyols et des résines époxyde-polyols.

6. Résine de polyuréthanne selon la revendication 5, **caractérisée en ce que** les composants qui dérivent des polyols B sont présents selon une proportion en masse de 40 à 60 % dans la résine de polyuréthanne.

7. Résine de polyuréthanne selon la revendication 1, **caractérisée en ce que** les polyols C sont choisis parmi l'éthylèneglycol, le diéthylèneglycol, le 1,2-propanediol, le 1,3-propanediol, le 1,4-butanediol, le 1,2- et le 1,3-butylèneglycol, le néopentylglycol, le 1,2- et le 1,4-cyclohexanediol, le 1,4-cyclohexanediméthanol, le 1,6-hexanediol, le bisphénol A (2,2-bis(4-hydroxyphényl)-propane), le bisphénol A hydrogéné (2,2-bis(4-hydroxy-cyclohexyl)propane), ainsi que les mélanges de ceux-ci.

8. Résine de polyuréthanne selon la revendication 7, **caractérisée en ce que** les composants qui dérivent des polyols C sont présents selon une proportion en masse de 0,5 à 20 % dans la résine de polyuréthanne.

9. Résine de polyuréthanne selon la revendication 1, **caractérisée en ce que** les composés D formant des anions sont choisis parmi les acides dihydroxycarboxyliques que sont l'acide 2,2-diméthylolacétique, l'acide 2,2-diméthylolpropionique, l'acide 2,2-diméthylolbutyrique, l'acide 2,2-diméthylolpentanoique et les acides tartriques isomères, l'acide gluconique et les composés contenant des groupes amino que sont l'acide 2,5-diaminovalérique (ornithine) et l'acide 2,4-diaminotoluènesulfonique- (5) .

10. Résine de polyuréthanne selon la revendication 9, **caractérisée en ce que** les composants qui dérivent des composés D formant des anions sont présents selon une proportion en masse de 2 à 20 % dans la résine de polyuréthanne.

11. Résine de polyuréthanne selon la revendication 1, **caractérisée en ce que** le composant E est choisi parmi le glycérol, l'hexanetriol, le pentaérythritol, le dipentaérythritol, le diglycérol, le triméthyloléthane et le triméthylolpropane.

12. Résine de polyuréthanne selon la revendication 11, **caractérisée en ce que** les composants qui dérivent des composés E sont présents selon une proportion en masse de 2 à 15 % dans la résine de polyuréthanne.

13. Résine de polyuréthanne selon la revendication 1, **caractérisée en ce que** les composés F sont choisis parmi les amines mono-secondaires monofonctionnelles et les monoalcools, les composés qui contiennent un hydrogène actif ayant une réactivité différente vis-à-vis des groupes NCO, et les composés qui, outre le groupe réactif vis-à-vis des groupes isocyanate, contiennent encore une ou plusieurs doubles liaisons oléfiniques.

14. Résine de polyuréthanne selon la revendication 13, **caractérisée en ce que** les composants qui dérivent des composés F sont présents selon une proportion en masse de 2 à 20 % dans la résine de polyuréthanne.

15. Résine de polyuréthanne selon la revendication 1, **caractérisée en ce que** les composés F sont choisis parmi les composés difonctionnels que sont l'eau, l'hydrazine et les diamines que sont l'éthylènediamine, le 1,3-diaminopropane, le 1,4-diaminobutane, l'hexaméthylène-diamine, les amines pouvant aussi porter des substituants, tels que des groupes OH.

16. Résine de polyuréthanne selon la revendication 15, **caractérisée en ce que** les composants qui dérivent des composés G sont présents selon une proportion en masse de 1 à 10 % dans la résine de polyuréthanne.

17. Procédé de préparation de résines de polyuréthanne selon la revendication 1, **caractérisé en ce que** l'on met en oeuvre successivement les étapes suivantes :
- synthèse d'un prépolymère à fonctionnalité isocyanate par réaction de polyisocyanates A avec des polyols B ayant une masse moléculaire moyenne en nombre Mₙ d'au moins 400 g/mol, éventuellement de polyols C à faible masse moléculaire et de composés D qui comportent au moins deux groupes réactifs vis-à-vis des groupes isocyanate et au moins un groupe pouvant former des anions, pour obtenir un prépolymère contenant des groupes NCO libres, qui présente un indice de Staudinger Jₒ d'au moins 20 cm³/g,
- neutralisation au moins partielle des groupes du composé D pouvant former des anions, avec formation de groupes anioniques, et dispersion de ce prépolymère ABCD dans l'eau, et
- réaction du prépolymère neutralisé avec au moins l'un des composants choisis parmi les polyols à faible masse moléculaire E, qui ne portent aucun autre groupe réactif vis-à-vis des groupes isocyanate, ces composés étant utilisés en une quantité telle que le nombre des groupes hydroxyle se trouvant dans la quantité utilisée du composant E soit supérieur à celui des groupes isocyanate encore présents dans le prépolymère ABCD, les composés F qui sont monofonctionnels vis-à-vis des isocyanates, ou qui contiennent un hydrogène actif ayant une réactivité différente, et qui sont différents des composés E, et éventuellement les composés G qui sont différents de B, C, D, E et F, et qui contiennent au moins deux groupes réactifs avec les groupes NCO.

18. Utilisation des résines de polyuréthanne selon la revendication 1 en tant que liants dans des peintures et vernis à séchage physique, utilisation pour laquelle on disperse la résine de polyuréthanne dans de l'eau, et on lui ajoute des agents antimousse et des auxiliaires d'étalement, et éventuellement aussi des pigments et des dispersants destinés aux pigments, et éventuellement d'autres liants aqueux.

19. Utilisation des résines de polyuréthanne selon la revendication 1 dans des peintures et vernis à un composant durcissant à la chaleur, pour laquelle on disperse la résine de polyuréthanne dans de l'eau, et on ajoute en mélangeant un durcisseur, actif à chaud, choisi parmi les résines d'amine et les isocyanates bloqués.

20. Utilisation des résines de polyuréthanne selon la revendication 1 dans des peintures et vernis à deux composants, pour laquelle on disperse la résine de polyuréthanne dans de l'eau, et on ajoute immédiatement avant la mise en oeuvre, tout en mélangeant, un durcisseur actif à la température ambiante, choisi parmi les isocyanates aliphatiques non bloqués à chaîne droite ou ramifiée, ou cyclique.
